Europäisches Patentamt

(19) European Patent Office

Office européen des brevets

(11) Publication number : **0 612 972 A1**

(12) # EUROPEAN PATENT APPLICATION

(21) Application number : **94500029.7**

(22) Date of filing : **16.02.94**

(51) Int. Cl.⁵ : **G01B 5/00**

(30) Priority : **22.02.93 ES 9300340**

(43) Date of publication of application :
**31.08.94 Bulletin 94/35**

(84) Designated Contracting States :
**AT BE CH DE DK FR GB GR IE IT LI LU NL PT SE**

(71) Applicant : **Rodriguez Garcia, Roberto-Celso**
**Joaquin Villa Cenal, 7 - 2 A**
**E-33006 Oviedo (ES)**

(72) Inventor : **Rodriguez Garcia, Roberto-Celso**
**Joaquin Villa Cenal, 7 - 2 A**
**E-33006 Oviedo (ES)**

(74) Representative : **Polo Flores, Carlos**
**c/o MODESTO POLO,**
**Dr. Fleming, 16**
**E-28036 Madrid (ES)**

(54) **Measuring system for pieces of aluminum and measuring patterns obtained for this system.**

(57)    This is designed to avoid the errors in measurement arising from the use of gauges or classical feeler gauges when these are made of steel, ceramic materials or tungsten carbide, given the different expansion coefficients of these materials in comparison with those of aluminium parts or shapes when substantial ambient temperature changes occur in the work area. The system consists of the use of gauges, standard feeler gauges or any other measuring device manufactured using the same type of material as that which is to be measured, that is, aluminium or an aluminium alloy, such that this offers the same coefficient of expansion. It is also planned to subject the said measuring devices, or at least their working surfaces or those which make contact with others, to a hardening process, such as anodizing or hard chroniumplating, for example, to gain perfect flatness and avoid wear.

EP 0 612 972 A1

## THE OBJECT OF THE INVENTION

This invention refers to a new system of measurement, especially designed for use in the manufacture of aluminium parts, and therefore especially useful in workshops where this material is used and where the tolerances permitted are minimum, such as the aeronautical, space, missile defense etc. sectors, the purpose of the system being to improve the conditions of measurement under any ambient temperature conditions.

The invention also refers to the standards of measurement which are obtained by the said system.

## THE BACKGROUND OF THE INVENTION

The measure or measurement as an operation or set of operations by which a quantitative determination of physical magnitude is attained through comparison with predefined magnitudes used as standards, or by the usage of calibrated instruments, aims to achieve results in the form of numerical values showing the relation between the magnitude under examination and the standard adopted as a unit.

Within the several types of measurement according to how this is carried out, direct or relative measurements are taken and compared with values that must be measured against a standard (or a copy of the same).

In relation to the type of measurement that has to be undertaken, and to the end of the same, different types of measurement are used, calibrated instruments being of great importance in this field in current practice, which even though they are convenient and exact for many uses, cannot generally be used for measurements requiring great exactitude, for which methods involving substitution or opposition are necessary.

The method of substitution involves subjecting a measuring instrument a value equal to that which is to be measured, and the value of which is known beforehand (a sample) and then measuring the value under scrutiny such that by comparing the effects arising from the measurement under scrutiny the value of this last is obtained. This method is equivalent to repetition of instrument calibration for each measurement to be taken.

Respecting the method of measurement by opposition or zero, this in general terms consists of introducing an object of standard size in the appropriate device together with the magnitude under scrutiny, such that their affects mutually cancel each other out and the scale on the measuring instrument shows zero. This is therefore a highly precise method and it is much used in laboratories.

If in its general description the operation of measurement seems to be conceptually uncomplicated, in practice great difficulties are present, if the end is to determine the magnitude with a high degree of exactitude.

The clearest difficulty lies in the limit of sensitivity in the sense that this may prevent the detection of differences between the object under examination and the sample if these fall below a certain value, this limitation usually being overcome by the use of instruments which, although they do increase the said sensitivity, on the other hand, even when they are constructed with great care, introduce other factors giving rise to error.

Such errors arising from the instruments used in measurement are taken into account in the interpretation of the data obtained, given that as they are systematic errors, i.e., they arise due to the instruments and the method used, they can be given set values in the practical carrying out of the measuring process.

In the case of the measurement of size, in actual usage in the machining or manufacture of aluminium parts, the most important faults in measurement are produced by the standard samples used in workshops.

These standard parts are usually made of steel, the expansion coefficient of which ($11.5 \times 10^{-6}$ ºC$^{-1}$) is approximately half that of the value corresponding to aluminium.

Given that in the workshops where these parts are made it is very difficult to maintain a constant temperature of 20° C, which is the reference temperature for the standard parts, constant deviations arise in measurements, which currently and due to the continuous reduction in the range of admissable tolerances, means that the majority of workshops lack sufficient guarantees when precise measurements of the said aluminium parts are needed.

Likewise, other materials also in general use for standard parts or standard gauges, such as tungsten carbide, present smaller expansion coefficients than aluminium ($5.5 \times 10^{-6}$ ºC$^{-1}$) than that of steel, which further increases alterations in measurement.

As an example of the above, if the temperature in a workshop is 25° C, and we attempt to measure the height of an aluminium part, for which the plans show a nominal height of 200 mm, and using a planeity table, standard blocks or reference gauges, and a comparative clock with its stand, then by applying the formula:

$$Lf = Li + (Li \times \Delta T \times C)$$

where:

Lf:    length at ambient temperature
Li:    length at the reference temperature
$\Delta T$:    Increase in temperature
C:    Coefficient of expansion.

We know the real size of the standard blocks of nominally 200 mm in the workshop (200.0115 mm) and by the same method, if the part had been machined to 200 m. in the workshop it would measure 200.023 mm. The reading given by the comparator would be 0.0115 outside tolerance, and obviously an incorrect reading.

## DESCRIPTION OF THE INVENTION

The system of the invention is conceived with the aim of resolving in a fully satisfactory manner the problem explained above.

For this the actual form of the said system consists of the manufacture of gauges, or other measuring instruments designed for continuous usage and which are necessary in workshops where the machining of aluminium parts takes place, these being made of the same material, that is of aluminium or aluminium alloys, such that the size of the gauge which expansion would influence in its use for measurement would remain permanently proportional to that of the shape or part to be measured, independently of the ambient temperature in the workplace, thereby giving rise to correct machining, in that deviation with respect to the nominal size will be zero or almost zero.

Evidently this solution gives rise to a problem deriving from the fact that aluminium is not very hard, for as this gauge is to be subjected to continuous usage those of its surfaces which come into contact with parts will rapidly become worn, thereby causing a progressively increasing deviation from nominal values.

To avoid this effect and according to another of the characteristics of the invention, it is also planned to subject the working surfaces of the gauges to a specific hardening process by any appropriate method offered by current commercially available technology.

## THE PREFERENTIAL FORM OF MANUFACTURING THE INVENTION

As is known, in workshops manufacturing aluminium parts, feeler gauges or standard gauges are used which, as is mentioned above, are generally made of steel, ceramic materials or tungsten carbide.

However, according to the system described by the invention and using procedures which are the same as or similar to those which are conventional for manufacturing the said gauges, these are made using aluminium as the raw material, such that the variations in size which arise in the said gauges or standard gauges due to changes in ambient temperature in the work place, that is in the workshop, are proportional to those which in turn arise in the parts due to be machined, as these are also made of aluminium which means, as is stated above, that deviation from the nominal size in measurements will be virtually zero.

Complementary to the above, and with the aim of assuring a long working life for the said gauges or standard gauges, and more exactly to avoid deterioration of the same due to the fact that aluminium is not very hard and the wear arising from their constant usage, it has been planned that these gauges or standard gauges are to be suitably hardened, at least on their working surfaces, by chemical - physical treatments such as anodizing, plasma coating, hard chroniumplating or any other appropriate method.

A longer description is not considered necessary for any expert in this field to be able to understand its scope and the advantages to which it would give rise.

The terms in which this report has been drawn up should be understood in their broad sense and not restrictively.

## Claims

**1st.-** A system of measurement for aluminium parts, based on the use of classic gauges, standard gauges or similar measuring instruments, which is essentially characterized by consisting of using aluminium or aluminium alloys as raw material for the fabrication of such measuring instruments, such that in relation to the part to be measured desired tolerances are not affected in a negative manner by the different coefficient of expansion of the standard gauge and the part to be measured in reaction to possible changes in the ambient temperature of the workplace, it also being planned that the working surfaces of the said measuring devices are, following their manufacture, to be subjected to hardening by any appropriate chemical - physical method to obtain the optimum flatness of these surfaces together with a high resistance to wear, thereby prolonging their useful lives.

**2nd.-** Standards to be used in measurement obtained by the system described in the 1st claim, essentially characterized by the fact that, independently of their configuration or size, they are of the same or similar nature to the parts to be machined, in this case aluminium or an aluminium alloy, with working surfaces, or those which make contact with others, that have been hardened.

**European Patent
Office**

**EUROPEAN SEARCH REPORT**

Application Number

EP 94 50 0029

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-2 500 313 (J.A. HARRINGTON) 14 March 1950<br>* column 1, line 36 - line 45 *<br>* column 2, line 15 - line 21; figures * | 1,2 | G01B5/00 |
| A | DE-B-10 79 847 (SIEMENS-SCHUCKERT) 14 April 1960<br>* the whole document * | 1,2 | |

TECHNICAL FIELDS
SEARCHED     (Int.Cl.5)

G01B

The present search report has been drawn up for all claims

| Place of search | Date of completion of the search | Examiner |
|---|---|---|
| THE HAGUE | 14 June 1994 | Ramboer, P |